# EUROPEAN PATENT APPLICATION

(11) **EP 3 113 309 A1**
(43) Date of publication of application: **04.01.2017**
(21) Application number: 15755413.0
(22) Date of filing: 27.02.2015
(51) Int. Cl.: H02G 3/12, H02G 3/14

(54) **FLUSH MOUNT JUNCTION AND TERMINAL BOX**

(30) Priority: 27.02.2014 ES 201430265
(71) Applicant: Colmena Bonache, Jordi, 08940 Cornellà de Llobregat (Barcelona) (ES); Herraiz Amo, Jordi, 08940 Cornellà de Llobregat (Barcelona) (ES)
(72) Inventor: Colmena Bonache, Jordi, 08940 Cornellà de Llobregat (Barcelona) (ES); Herraiz Amo, Jordi, 08940 Cornellà de Llobregat (Barcelona) (ES)
(86) International application number: PCT/ES2015/070145
(87) International publication number: WO 2015/128535

(57) **Abstract**

The invention relates to a flush mount junction and terminal box of variable plan configuration, with a first internal cover (5), tightly fitted to the opening of the junction box holder with screws (6), connected to a decorative second external cover (7) by detachable and hidden joining means, preferably magnets (9), that are associated with ferric parts (10) located on the internal surface (7B) of the second external cover (7), the first internal cover (5) being sunken and the second external cover (7) being flush with the surface of the wall (3). The box comprises a peripheral frame forming therewith a single compact and inseparable unit and said box also being suitable for including one or more lighting LEDs (11), located on the outer face of the first internal cover (5) or in the channel (21) located between the vertical wall (13A) of the peripheral frame (13) and the junction box (1).

## Description

### Subject matter of the Invention

The invention relates to a flush mount junction and terminal box, which provides various innovative features and advantages inherent to its particular configuration which will be described in detail below and which entail a remarkable novelty in the current state of the art.

The object of the present invention lies specifically in a box of the type which, intended for being flush mounted in walls and partitions, has the main purpose of serving as a junction and terminal point for the cross-connections of cables of the electrical installation in rooms of houses or shops, which box has the innovative particularity of having a structural configuration specifically designed to allow it to be installed such that it is inserted in said wall or partition flush with the surface thereof and without projecting above said surface like what happens with conventional boxes.

### Field of application of the invention

The field of application of the present invention is encompassed within the sector of the industry dedicated to the manufacturing of junction boxes or terminal boxes for electrical installations which can be flush mounted in a wall, ceiling or in other locations and/or applications necessary.

### Prior art

The technical problem which arises from conventional flush mount junction and terminal boxes and is to be solved by the present invention is the fact that in order to be able to open the cover of the boxes, the cover is installed such that it projects slightly above the surface of the wall, with the subsequent negative esthetic effect it causes most of the time, since it will always constitute a bulging element that is furthermore always noticeable although attempts were made to conceal it by means of paint or wallpaper. Furthermore, when for any reason the box must be opened, the paper must be torn away and the paint tends to peel off or leave marks, so its existence located above the surface level of the wall becomes more prominent and unsightly. The only solution is to again completely wallpaper or paint the section of the wall it occupies, with the economic expenditure it entails.

It must be pointed out that the fact that, in order to be able to open the cover of conventional junction boxes, said cover must be raised above the surface of the wall in which it is flush mounted and this is because said cover is usually designed to be completely smooth and at the same time, to be suitably fixed to the sides of the box, for which clips or lugs that are set therein by pressure and even screws, are normally used. For said reason, in order to be able to open the cover of the box it is necessary to pry the edge of the cover and the side edge of the box, thereby making it essential for the box to be partially raised above said side edge of the box and thus allowing the introduction of a tool, for example a screwdriver, with which said prying action is carried out and the cover can be extracted from its fixing points by pressure.

Furthermore, it often happens that when putting the cover of the terminal box once it is open back in place, the fixing means does not fit tightly like before as it has been moved and/or bent, so the cover is twisted or badly positioned, such that, in addition to the paint or paper having been damaged, the box becomes even more unsightly.

In addition, there are regulations stating that these boxes must only be opened using a certain type of tool, so current boxes with "clips" may be on the verge of the regulations and may even be illegal, since in many cases said boxes could be opened with nails, or by pressing with fingers, which would involve a significant risk.

Therefore, it would be desirable to be able to provide junction boxes with a different coupling system between the box and the cover so that, without any anchoring element being present on their surface, their installation allows the cover to be tightly fitted to the hole of the box and flush with the surface of the wall, thereby preventing the problem entailed by a projecting element which makes the room look unsightly, and which furthermore complies with the regulations of opening the box using only a certain type of tool, the development of a box with such premises being the essential objective of the present invention.

As a reference to the current state of the art, it must be pointed out that at least on their part the applicants are not aware of the existence of any other junction and terminal box or similar invention having technical, structural and constitutive features similar to those of the invention proposed herein and as claimed.

### Disclosure of the invention

The flush mount junction and terminal box proposed by the invention is therefore configured as a remarkable novelty within its field of application, since the objectives described above are satisfactorily achieved based on its implementation, the characterizing details which make it possible being conveniently listed in the final claims accompanying the present specification.

Specifically, the invention proposes, as indicated above, a flush mount junction and terminal box the purpose of which is to serve as a connection point between the conductor cables of electrical installations, which has in an innovative manner dual particularity: the first particularity being the existence of a dual cover (first or internal cover and second or external cover) system allowing it to be installed flush with the surface of the wall in which it is flush mounted and without the external or exposed surface thereof having any type of exposed anchoring element; the second particularity being the incorporation of a frame in the conventional holder of the box which allows it to be locked or tightly fitted to the cavity of the wall or ceiling and which complements the second external cover of the box.

To that end and more specifically, the box of the invention, which is conventionally formed by a holder usually of plastic material and variable configuration at the inside of which there are arranged the ends of the connecting cables that it corresponds in each case and has a first cover which lays over the opening of said holder to protect the connections contained therein, comprises a second cover or decorative cover which is joined to the first cover through detachable and hidden joining means provided thereto and the external surface or exposed face of which is flush with the surface of the wall in which the flush mount box is installed.

The first internal cover is thereby fixed to the holder by means of any conventional fixing system, for example, by means of screwing, allowing a perfect and safe coupling between this first internal cover and the holder of the box for suitably protecting the connections it houses therein, allowing it to be opened and closed as many times as necessary without problems, whereas the second external cover is coupled and fixed on the external portion of the first internal cover by detachable and hidden joining means, i.e., the existence thereof cannot be seen from the outside, which consist, for example, of magnets; or snap locks or Velcro®-type straps at strategic points of the first internal cover that are separated from one another when pressing on an opposite point of the surface of the second external cover, causing a prying effect; or of invisible closure fittings with Chip lock-type spring mechanism, any other means being suitable but, logically, the simplest option is preferred to not make the product to expensive, there being a need to take into account that in this case said means do not have to have a lot of resisting force, since they only need to hold this second external cover on the first internal cover.

In addition to those that have already been mentioned, the detachable and hidden joining means include expressly, among others, those formed by a joint system of loops or rings associated with the first internal cover and connected to hooks or the like fixed in the internal wall of the holder of the box or those formed by a system of tab located in the first internal cover and notches defined in the holder of the box, in this case both systems having an auxiliary element, specifically an ejector spring, for separating the first internal cover.

These two detachable and hidden joining means, together with the implementation of strategically placed magnets, are fully functional to allow installing the junction box in the desired location, achieving the essential objective that has already been described, i.e., the assembly of the box is flush with the wall or ceiling, without projecting from same in any way, being effective both if the junction box is formed with the dual cover system that has already been described and if a single cover is used.

In this regard, it is fundamental to point out the second novelty provided by the new junction box, specifically by the mentioned frame, said frame being depicted with geometrically formed plan and profile coinciding with the junction box and suitably sized with respect to it, with a vertical wall that surrounds the periphery of the upper opening of the holder of the box and is transversely prolonged in a horizontal crown projecting from the contour of the holder and having optionally a plurality of strategically distributed through perforations, irregularities or the similar feature and making the gripping of putties, Pladur® tapes, etc., easier. At some points of the periphery thereof, depending on its geometrical shape, said crown has at least one through hole for vertically housing a pin screw that projects slightly with respect to the cavity of the box and allows fixing and supporting said frame in the wall or ceiling (conceived especially for Pladur®-type hollow wall), with the holder of the box duly flush mounted in its housing of the aforementioned wall or ceiling, such that the crown of the frame, which has already been described, is positioned flush with the wall or ceiling, preventing the final finish (painting, etc.) of the aforementioned wall or ceiling from being altered by the presence of the flush mount box. It must also be pointed out that a channel is depicted between the vertical wall of the mentioned frame and the upper edge of the holder.

Finally, it must be pointed out that the incorporation of at least one lighting LED diode located between both covers or housed in the side channel connected to the frame which has already been described is optionally contemplated to thereby achieve a backlighting effect which brings out the profile of the joint between the second external cover and the edge of the hole of the wall in which the box is flush mounted, so instead of concealing the existence of the junction box, such existence is converted into a indirect light point for lighting up or decorating the room. Optionally, it could also be applied with an external cover made of a more translucent material and light is emitted through the entire box (even being able to create an emergency light) or a decorative design or drawing can even be made thereon, allowing all types of shapes, such as for example (although not exclusively), night lights in kids' rooms.

The described flush mount junction and terminal box formed by the holder with its frame, the first internal cover and the second external cover, is therefore an innovative structure having structural and constitutive features that were unknown until now for its intended purpose, and this combined with its practical usefulness give it sufficient grounds to obtain the exclusive right that is sought.

### Description of the drawings

To complement the description that is being made and for the purpose of aiding to better understand the features of the invention, drawings are attached to the present specification as an integral part thereof in which the following has been depicted in an illustrative and non-limiting character:
Figure 1 shows a schematic side and sectional view of an example of the flush mount junction and terminal box, object of the invention, depicted once installed in the wall, the main portions and elements it comprises, as well as the configuration and arrangement thereof, being shown.
Figure 2 shows a front view of another example of the flush mount junction and terminal box of the invention, now depicted with the first internal cover put in place and the second external cover to be put in place, and arranged with its internal portion facing upwards, such that an option of placing the joining elements it incorporates is shown; (although the most common would be to associate the next joining points, screw head - magnet)
Figure 3 again shows a front view of the box of the invention, in this case depicted with both covers put in place, the cover is shown as being tightly fitted to the hole and located flush with the wall.
Figure 4 shows a technical top perspective view of the detail of the frame of the box (which, in this case and only as an example, is microperforated, although it may have another type of irregularity that helps with gripping).
Figure 5 shows a technical lower perspective view of the detail of the frame of the box
Figure 6 shows a technical elevational view of the detail of the frame of the box.
Figure 7 shows a top axonometric perspective view of an embodiment of a dual cover box with a square geometry.
Figure 8 shows a lower axonometric perspective view of an embodiment of a dual cover box with a square geometry
Figure 9 shows an elevational view of an embodiment of a dual cover box with a square geometry.
Figure 10 shows the section of an embodiment of a dual cover box with a square geometry.
Figure 11 shows the top axonometric perspective view of an embodiment of a dual cover box with a round geometry.
Figure 12 shows an elevational view of an embodiment of a dual cover box with a round geometry.
Figure 13 shows a section of an embodiment of a dual cover box with a round geometry.
Figure 14 shows a technical perspective view of an embodiment of a single cover box with rings, hook and ejector spring as fitting means.
Figure 15 shows an axonometric perspective view of an embodiment of a single cover box with rings, hook and ejector spring as fitting means.
Figure 16 shows an elevational view of an embodiment of a single cover box with rings, hook and ejector spring as fitting means.
Figure 17 shows a section of an embodiment of a single cover box with rings, hook and ejector spring as fitting means.
Figure 18 shows a top axonometric perspective view of an embodiment of a single cover box with notch, tab and ejector spring as fitting means.
Figure 19 shows an elevational view of an embodiment of a single cover box with notch, tab and ejector spring as fitting means, with detail of the tab.
Figure 20 shows a section of an embodiment of a single cover box with notch, tab and ejector spring as fitting means, with detail of the notch.
Figure 21 shows a technical perspective view of an embodiment of a single cover box with magnetized system as fitting means, with detail of the magnets and screws/ferric parts
Figure 22 shows a top axonometric perspective view of an embodiment of a single cover box with magnetized system as fitting means.
Figure 23 shows an elevational view of an embodiment of a single cover box with magnetized system as fitting means.
Figure 24 shows a section of an embodiment of a single cover box with magnetized system as fitting means.

### Detailed disclosure of the invention

In view of the mentioned drawings and according to the numberings used, some preferred but non-limiting embodiments of the flush mount junction and terminal box, object of the invention, can be seen therein, which box comprises the portions and elements that are indicated and described in detail below.

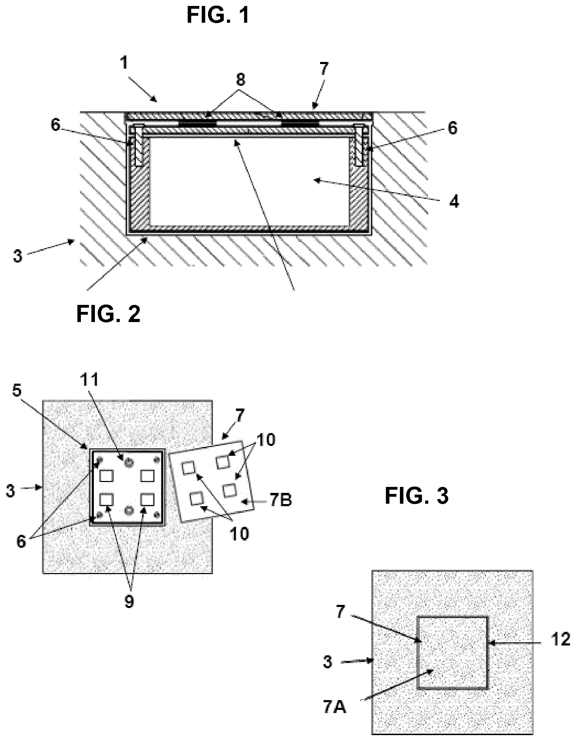

Therefore, as observed in Figures 1, 2, and 3, the junction box (1) in question, which is applicable for being installed in a hole (2) of a wall (3), comprises a holder (4) of variable plan configuration, for example, a square configuration as shown in the drawings, although it can also have a circular or any other shape, with a first internal cover (5), which lays over the opening of said holder (4) and to which it is fixed by means of a conventional fixing system, for example by means of screws (6), and a decorative second external cover (7) which lays over the first internal cover (5) and is fixed thereto with detachable and hidden joining means (8), i.e., not visible from the outside, said assembly of holder (4), first internal cover (5) and second external cover (7) being sized so that the external surface or exposed face (7a) of this decorative second external cover (7) is flush with the surface of the wall (3), once the box is flush mounted in the hole (2) thereof and, therefore, the first internal cover (5) being sunken with respect to said surface of the wall, as seen in Figure 1.

The detachable and hidden joining means (8) fixing the second external cover (7) on the first cover (5) preferably consist of magnets (9) provided on the external surface of the first internal cover (5) coinciding with ferric parts (10) of the internal surface (7b) of the second external cover (7), although they can also consist of snap locks or Velcro®-type straps located at one or more central or side points between both covers, such that they are separated from one another when pressing on a remote or opposite point, for example close to the edge, causing a prying effect; or they can consist of invisible closure fittings with a spring mechanism which, when pressing on the cover, actuate said spring and open the cover. There is the possibility of the actual heads of the screws (6) serve as the detachable joining means (8) of the first internal cover (5), which heads acting as ferric parts that are the base for fixing to the detachable and hidden joining means (8), specifically the magnets (9) located on the internal surface (7b) of the second external cover (7).

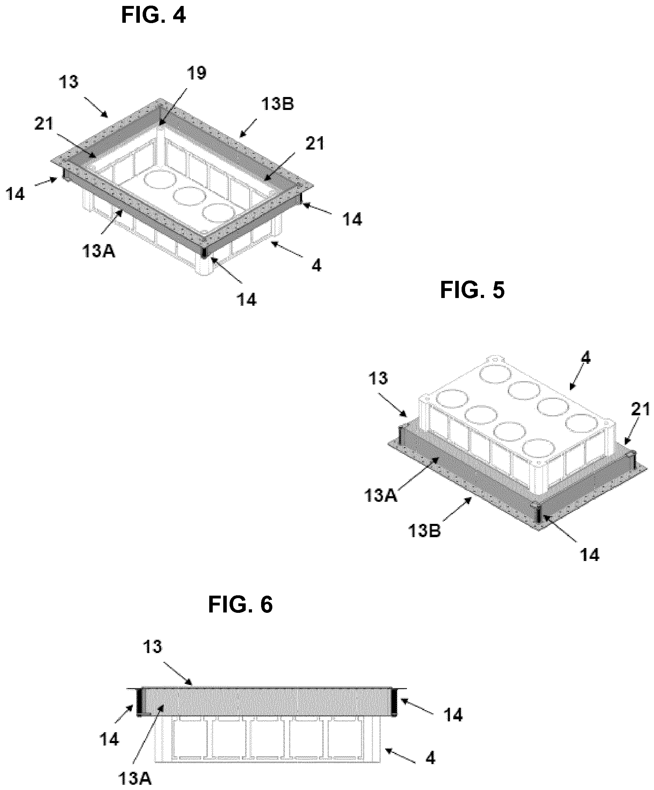

Additionally, as shown in Figure 2, the existence of one or more lighting LEDs (11) located on the outer face of the first internal cover (5) is contemplated, it being equally viable for said LEDs to be tightly fitted to the channel (21) described in Figures 4, 5 and 7, which LEDs when being switched on using for connection thereof the wiring itself housed inside the box (not depicted in the drawings) provide a backlighting effect as light is filtered through the joint (12) between the second external cover (7) and the edge of the hole (2) of the wall (3) in which the junction box (1) is flush mounted, since said second external cover (7) is laid over said LEDs.

Optionally and as described above, it could also be applied with a second external cover (7) made of a more translucent material and the light is emitted through the entire box (even being able to create an emergency light) or a decorative design or drawing can even be made thereon, allowing all types of shapes, such as for example (although not exclusively), night lights in kids' rooms.

Figures 4, 5 and 6 show the detail of the shape of the frame (13) which surrounds the periphery of the holder (4) of the junction box (1) arranged integral therewith and with which it jointly forms a single compact and inseparable unit, said frame (13) being formed by a vertical segment or wall (13A) which surrounds the periphery of the upper opening of the holder (4) of the box and is transversely prolonged in a horizontal crown (13B) projecting from the contour of said holder (4), such that by flush mounting the holder (4) in the space sized to that end in the wall, ceiling or plasterboard, said frame (13) is sufficiently accessible to allow the access to at least one pin screw (14) to which it is connected and fixed at, at least, one point of the periphery thereof, such that it can be manipulated for adjusting it and setting and fixing the assembly of the junction box (1) in position. Figure 4 also shows the way in which a channel (21) is depicted between the vertical walls (13A) of the frame (13) and the upper edge of the holder (4) of the junction box (1), said channel (21) being susceptible of housing the aforementioned LEDs and allowing the aforementioned junction box (1) to have its own lighting means. Figure 5 shows a view of said channel (21) inverted.

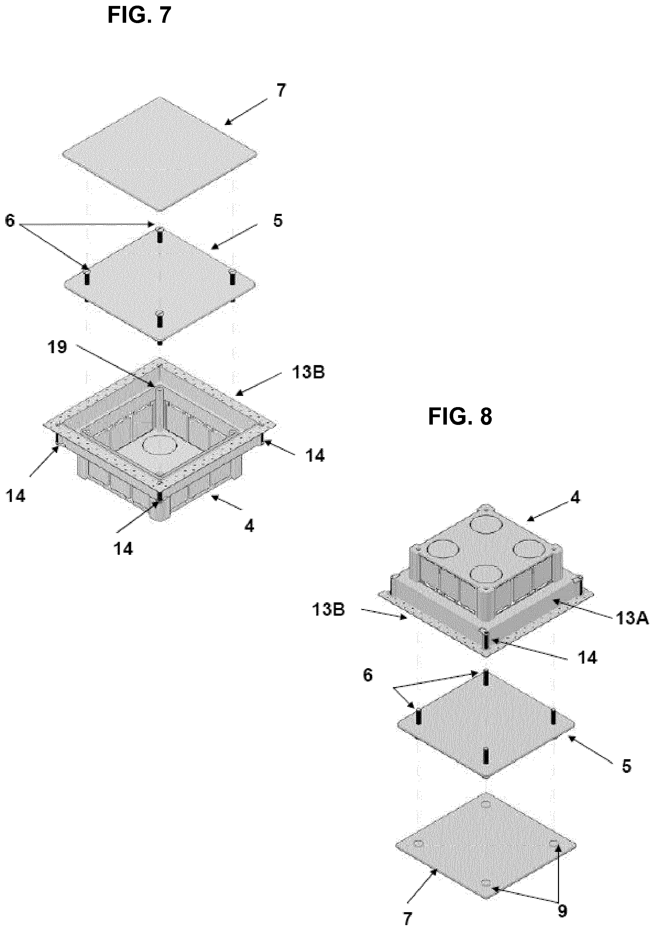

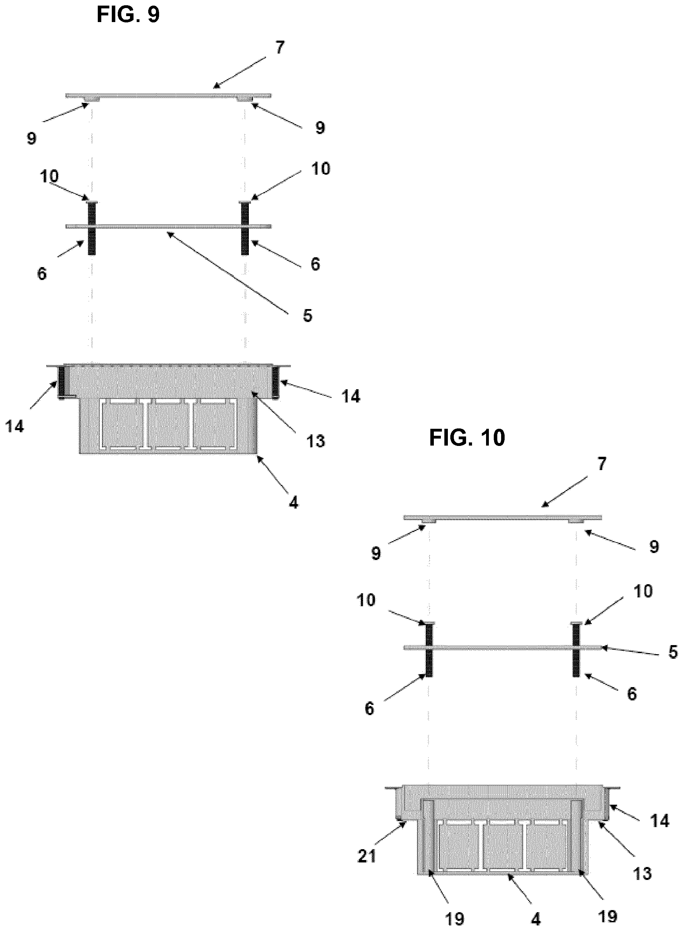

Figures 7, 8, 9 and 10 show the axonometric perspective views, elevational view and a section of an embodiment of the junction box (1) with a square geometric shape and its different portions disassembled, depicting the holder (4) of the junction box (1) associated with the frame (13) and having internally a tubular housing (19) for receiving the screws (6) fixing the first internal cover (5) in the holder (4), such that the wiring contained and housed in said holder (4) is suitably contained and locked in position. The second external cover (7) is in turn coupled to the first internal cover (5) by the action of the magnets (9) strategically located on the internal face of said second external cover (7) that are connected to the ferric parts (10) which are in fact the head of the screws (6) which has already been described. Figure 10 likewise shows in detail the channel (21) arranged between the vertical walls (13A) of the frame (13) and the upper edge of the holder (4) of the junction box (1).

The structure explained in the preceding drawings based on a box (1) having a square plan is applicable to a box (1) having a rectangular plan, varying logically the dimensions thereof.

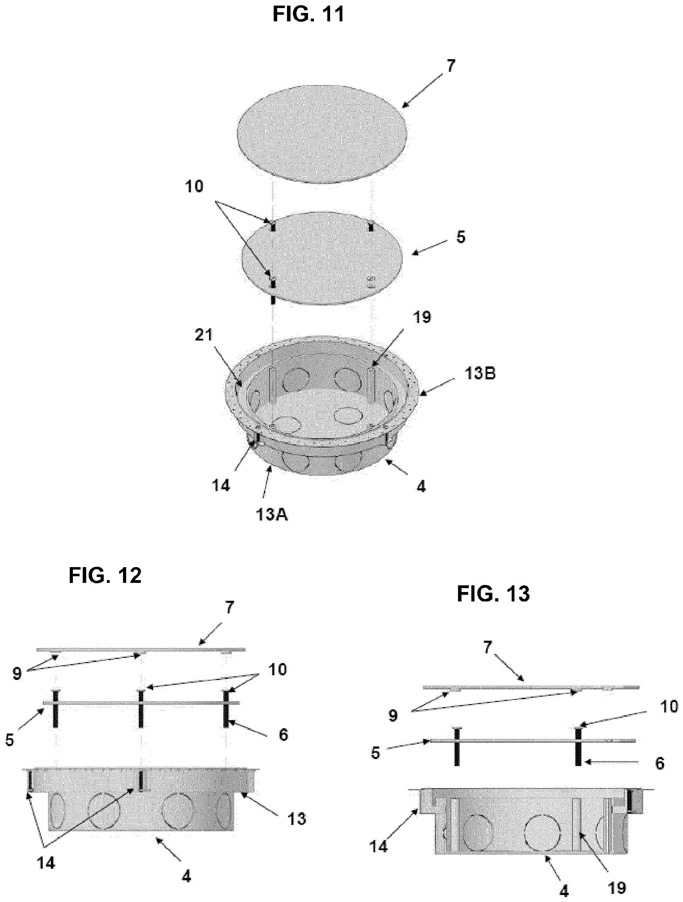

Figures 11, 12 and 13 show the axonometric perspective view, elevational view and a section of an embodiment of the junction box (1) with a circular geometric shape, likewise showing its different portions disassembled, which evidently share the same circular shape. The holder (4) of the junction box (1) likewise has in its internal portion the tubular housings (19) for the screws (6) the heads of which, which are in fact the ferric parts (10), are connected to the magnets (9) located in the internal face of the second external cover (7), allowing the fixing of the first internal cover (5) and second external cover (7). The first internal cover (5) is in turn coupled to the holder (4) of the junction box (1) by means of the screws (6) that are in turn placed in the tubular housings (19) located inside said holder (4). Figure 11 also shows the channel (21) that is depicted between the vertical walls (13A) of the frame (13) and the upper edge of the holder (4) of the junction box (1).

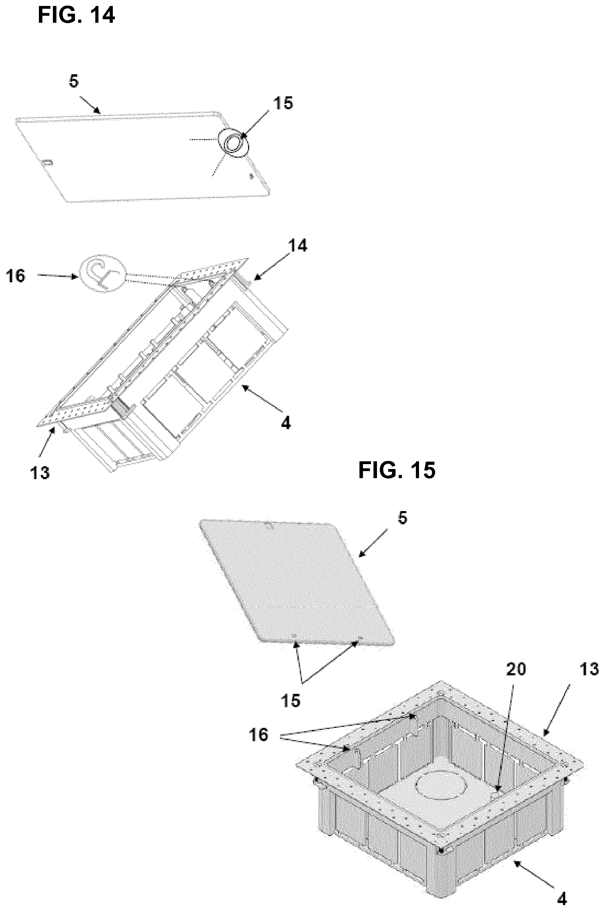

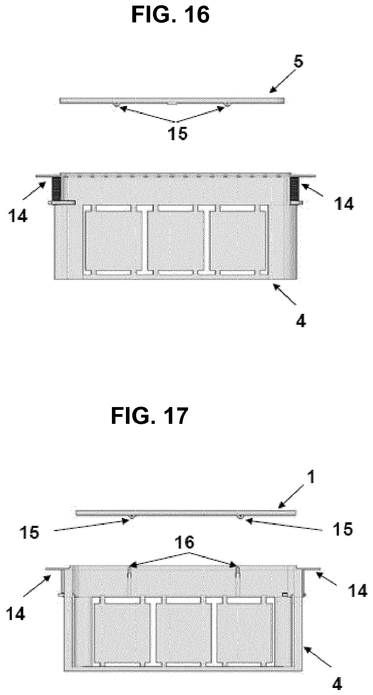

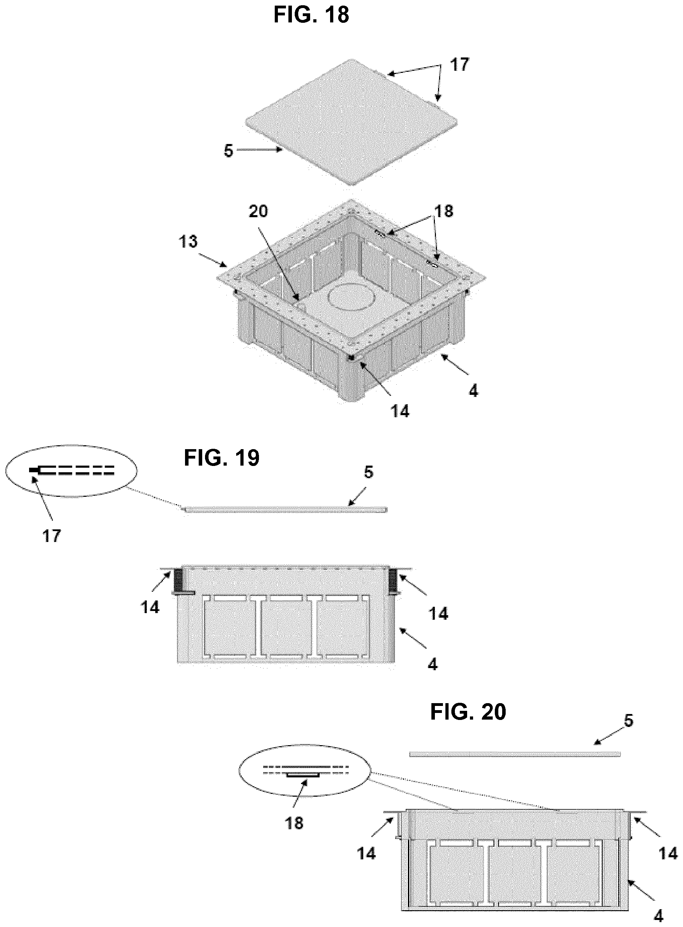

Figures 14, 15, 16 and 17 shows the application of specific detachable and hidden joining means (8) in a closure system formed with rings and hook, whereas Figures 18, 19 and 20 show the application of specific detachable and hidden joining means (8) in a closure system formed with notches and tabs, both applied to the holder (4) of the junction box to associate it directly with the first internal cover (5), which in these embodiments is the only cover. In these drawings, the junction box (1) maintains its shape with the frame (13) which has already been described and the pin screw (14) element suitably located for adjusting the placement thereof in the precise location, but in both cases the second external cover is dispensed with and only the first internal cover (5) is used. It must be pointed out that the pin screw (14) is particularly useful when this junction box (1) is to be used in a hollow wall or plasterboard, but it could be dispensed with when working directly on a wall made of bricks or mortar.

In Figures 14, 15, 16 and 17, the first internal cover (5), and in this case, the only cover, has on one of its peripheral edges at least a first fastening element, in this case formed like a ring (15) or loop whereas at least a second fastening element, in this case formed like a hook (16) or the like, is arranged inside the holder (4) of the junction box (1), in one of its partitions and in correspondence with the location of the mentioned rings (15) or loops.

In Figures 18, 19 and 20, the first internal cover (5) and, in this case, also the only cover, has on one of its peripheral edges at least one protruding tab (17) suitably sized and arranged for fitting in at least one notch or groove (18) made in one of the partitions of the holder (4) of the junction box (1), in correspondence with the enclave and position of the protruding tab (17) that has been described.

In both cases and as indicated in Figures 15 and 18, the holder (4) of the junction box (1) incorporates in the partition opposite the location of the closure means that have been described, an ejector spring (20) or a similar technical resource that acts for driving the extraction of the first internal cover (5).

In any case, the frame (13) with its horizontal crown (13B) allows the box to be housed in its location and makes it easier to achieve a uniform external finish, such that the upper portion of the junction box (1) is suitably located flush with the wall or ceiling, which is the objective of this invention.

Logically, the examples set forth in Figures 14 to 20, applying closure means based on the assemblies of rings/hooks and notches/tabs, are applicable to dual cover junction boxes, by suitably connecting and locating each portion of the closure and joining system on the internal surface (7b) of the second external cover (7) and on the external surface of the first internal cover (5).

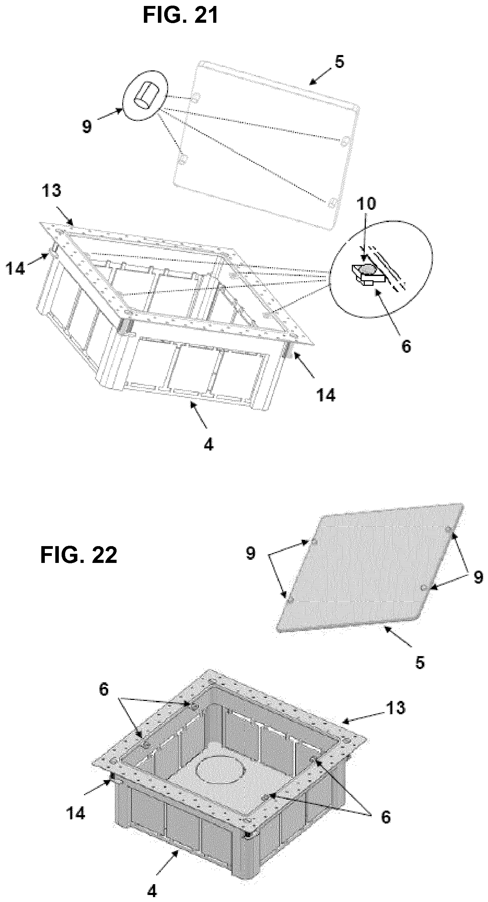

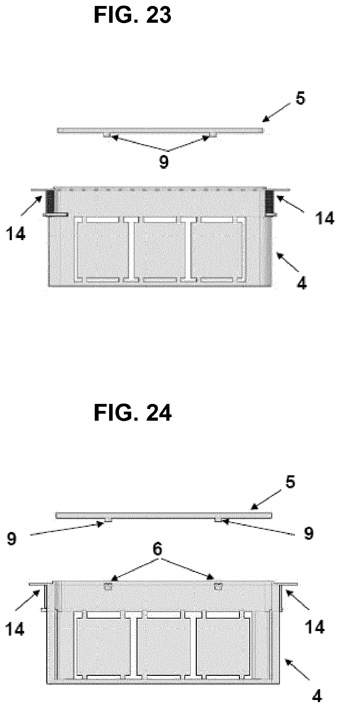

Figures 21, 22, 23 and 24 show the application of the detachable and hidden joining means (8) consisting of magnets (9), which has already been described previously in the preferred embodiment of the dual cover junction box (1), in a secondary and likewise viable embodiment in a single cover junction box, in which the magnets (9) connect the first internal cover (5) to the holder (4) of the junction box (1). In this embodiment, the magnets (9) are formed like blocks strategically fixed on the internal face of the first internal cover (5), and in this case, the only cover, whereas the screws (6), with heads by way of ferric parts (10) and housed in a support, are fixed in an area close to the upper edge of the different partitions of the holder (4), logically distributed in correspondence with the magnets (9) fixed in the first internal cover (5). This magnetized system acts in the manner similar to that described in the dual cover embodiment, the first internal cover (5) being extracted by prying effect. The screws (6), in addition to intervening in the fitting and closure system between the first internal cover (5) and the holder (4) of the junction box (1), actively act by means of screwing to regulate the degree of separation or of closeness between the first internal cover (5) with respect to the aforementioned holder (4) so greater installation flexibility is achieved according to the needs that may arise in each circumstance.

In view of the foregoing, the advantages of the proposed system are evident. In addition to fulfilling the obvious function of containing the wiring, the installation of the junction box is quick, efficient and simple both in plasterboard-type hollow walls and in brick wall or ceiling, and it is very useful and effective as a result of the ease of manipulating it and reopening it as many times as necessary since the frame allows perfect leveling of and with the adjacent surface and the integration thereof in the wall or ceiling.

Logically, the complete integration of the junction box in the wall entails a substantial esthetic improvement which is furthermore enhanced with the already mentioned option of inserting LEDs at the points especially provided to that end on the external face of the first internal cover of the junction box or channels in the external frame, which allows said box to act as a light which can be activated on schedule or by means of an APP-type application.

Evidently, the second external cover is a support which can likewise adopt different finishes, for example, an opaque finish, a translucent finish, a decorated finish, etc. On a practical level and besides the esthetic improvement which has already been described, the main embodiment of the dual cover junction box entails significant advantages with respect to boxes existing on the market. On one hand, the first internal cover, duly screwed to the holder, has sufficient consistency, strength and stability for retaining the wiring there, withstanding the possible expansive force thereof and preventing, for example, the release of dirt which inevitably ends up being deposited therein. The second external cover that can be easily extracted is likewise integrated in the wall or ceiling, without any projecting edge that may damage the finish of said wall or ceiling, for example, paper, paint, etc. and without any risk of bulges or cracks.

Likewise, the box described in this specification can be used as a terminal box for various applications, in addition to being applied as junction and terminal boxes for electrical wiring.

Having sufficiently described the nature of the present invention as well as the various ways of carrying it out to practice, it is not considered necessary to further describe the invention so that any person skilled in the art can comprehend the scope thereof and advantages derived from it, stating that within its essential features it could be carried out to practice in other embodiments differing in detail from that indicated by way of example, and such embodiments will likewise be covered by the protection that is sought provided that the fundamental principle thereof is neither altered, changed nor modified.

## Claims

1. Flush mount junction and terminal box which is applicable for being installed in a hole (2) of a wall (3), ceiling, etc., and comprising a holder (4) of variable plan configuration, with a first internal cover (5) which lays over the opening of said holder (4) and to which it is fixed by means of a fixing system, such as screws (6), and having elements of the pin screw (14) type for the fixing thereof on such wall or ceiling, essentially **characterized in that** it comprises a decorative second external cover (7), detachable and hidden joining means (8) and a peripheral frame (13) associated with the holder (4) of said junction box (1).

2. Flush mount junction and terminal box according to claim 1, **characterized in that** the second external cover (7) lays over the first internal cover (5) and is fixed thereto with the detachable and hidden joining means (8), i.e., not visible from the outside, the assembly of holder (4), first internal cover (5) and second external cover (7) being sized so that the external surface or exposed face (7a) of the second external cover (7) is flush with the surface of the wall (3), once the box is flush mounted in the hole (2), the first internal cover (5) being sunken with respect to said surface of the wall.

3. Flush mount junction and terminal box according to claims 1 and 2, **characterized in that** the detachable and hidden joining means (8) fixing the second external cover (7) on the first internal cover (5) consist of magnets (9) provided on the external surface of the first internal cover (5) coinciding with ferric parts (10) of the internal surface (7b) of the second external cover (7).

4. Flush mount junction and terminal box according to claims 1 and 2, **characterized in that** the detachable and hidden joining means (8) fixing the second external cover (7) on the first internal cover (5) consist of snap locks located at one or more central or side points between both covers, such that they are separated from one another when pressing on a remote or opposite point, causing a prying effect.

5. Flush mount junction and terminal box according to claims 1 and 2, **characterized in that** the detachable and hidden joining means (8) fixing the second external cover (7) on the first internal cover (5) consist of Velcro®-type straps located at one or more central or side points between both covers, such that they are separated from one another when pressing on a remote or opposite point, causing a prying effect.

6. Flush mount junction and terminal box according to claims 1 and 2, **characterized in that** the detachable and hidden joining means (8) fixing the second external cover (7) on the first internal cover (5) consist of invisible closure fittings with spring mechanism which, when pressing on the cover, actuate said spring and open the cover.

7. Flush mount junction and terminal box according to claim 1, **characterized in that** the frame (13) surrounds the periphery of the holder (4) of the junction box (1) arranged integral therewith, forming a single compact and inseparable unit, said frame (13) being formed by a vertical wall (13A) which surrounds the periphery of the upper opening of the holder (4) of the junction box (1) and is transversely prolonged in a horizontal crown (13B) projecting from the contour of said holder (4) and having optionally a plurality of strategically distributed through perforations, irregularities or the similar feature, said frame (13) being connected to at least one pin screw (14) which is fixed at, at least, one point of the periphery thereof.

8. Flush mount junction and terminal box according to claim 7, **characterized in that** a channel (21) is formed between the vertical wall of the frame (13) and the upper edge of the holder (4) of the junction box (1).

9. Flush mount junction and terminal box according to claim 1, **characterized in that** the detachable and hidden joining means (8) connect the holder (4) of the junction box (1) to the first internal cover (5).

10. Flush mount junction and terminal box according to claim 9, **characterized in that** the detachable and hidden joining means (8) consist of a closure system in which the first internal cover (5), and in this case, the only cover, has on one of its peripheral edges at least a first fastening element formed like a ring (15) or loop whereas at least a second fastening element formed like a hook (16) or the like is located inside the holder (4) of the junction box (1), in one of its partitions and in correspondence with the location of the mentioned rings (15) or loops.

11. Flush mount junction and terminal box according to claim 9, **characterized in that** the detachable and hidden joining means (8) consist of a closure system in which the first internal cover (5), and in this case, the only cover, has on one of its peripheral edges at least one protruding tab (17) suitably sized and arranged for fitting in at least one notch or groove (18) made in one of the partitions of the holder (4) of the junction box (1), in correspondence with the enclave and position of the protruding tab (17) that has been described.

12. Flush mount junction and terminal box according to claims 10 and 11, **characterized in that** the holder (4) of the junction box (1) incorporates, in the partition opposite the location of the detachable and hidden joining means (8), an ejector spring (20) or a similar technical resource.

13. Flush mount junction and terminal box according to claims 1, 10 and 11, **characterized in that** the detachable and hidden joining means (8) based on assemblies of rings/hooks and tab/notches are connected to the first internal cover (5) and to the second external cover (7) of the junction box (1) suitably locating each portion of the closure and joining system on the external surface of the first internal cover (5) and on the internal surface (7b) of the second external cover (7).

14. Flush mount junction and terminal box according to claims 1 and 3, **characterized in that** the detachable and hidden joining means (8) consisting of magnets (9) connect the first internal cover (5) to the holder (4) of the junction box (1), the magnets (9) being formed like blocks strategically fixed on the internal face of the first internal cover (5) and the screws (6), with their heads by way of ferric parts (10), housed in a support and fixed in an area close to the upper edge of the different partitions of the holder (4) of the box (1), being distributed in correspondence with the block-like magnets (9) fixed in the internal cover (5).

15. Flush mount junction and terminal box according to any of the preceding claims, **characterized in that** it contemplates the existence of one or more lighting LEDs (11) located on the outer face of the first internal cover (5) or in the channel (21) located between the vertical wall (13A) of the peripheral frame (13) and the junction box (1), using for connection thereof the wiring itself housed inside the box, the second external cover (7) laying over said lighting LEDs.

16. Flush mount junction and terminal box according to claim 1, **characterized in that** the second external cover (7) is opaque.

17. Flush mount junction and terminal box according to claim 1, **characterized in that** the second external cover (7) is translucent.
